# NEUE EUROPÄISCHE PATENTSCHRIFT

(11) **EP 0 273 508 B2**
(45) Veröffentlichungstag und Bekanntmachung des Hinweises auf die Entscheidung über den Einspruch: **31.08.1994**
(45) Hinweis auf die Patenterteilung: 27.11.1991
(21) Anmeldenummer: 87202492.2
(22) Anmeldetag: 12.12.1987
(51) Int. Cl.: B01D 53/34, F23J 15/00

(54) **Abgasreinigungsverfahren**
Waste gas purification process
Procédé d'épuration de gaz de rejet

(30) Priorität: 23.12.1986 DE 3644102
(43) Veröffentlichungstag der Anmeldung: 06.07.1988
(73) Patentinhaber: METALLGESELLSCHAFT AG, 60015 Frankfurt (DE)
(72) Erfinder: Wanner, Dieter, D-6237 Liederbach (DE); Schade, Horst, D-6000 Frankfurt am Main (DE)

(56) Entgegenhaltungen:
- EP-A- 0 077 170
- EP-A- 0 203 430
- DE-A- 2 725 436
- DE-A- 3 136 914
- DE-A- 3 235 020
- DE-A- 3 235 341
- DE-A- 3 235 559
- DE-A- 3 313 496
- DE-A- 3 539 347
- US-A- 4 273 750
- US-A- 4 555 390
- US-A- 4 588 569

## Beschreibung

Die Erfindung bezieht sich auf ein Verfahren zur Reinigung der beim Schmelzen von Glas entstehenden Abgase, die neben Staub auch gasförmige Schadstoffe wie S0₂, S0₃, HCI, HF und Stickoxide enthalten, durch Zugabe von Sorbentien in den Gasstrom und trockene Abscheidung der mit Schadstoffen beladenen Sorbentien zusammen mit dem Staub.

Derartige Abgase fallen beispielsweise beim Glasschmelzen an. Sie enthalten je nach Art und Zusammensetzung der verwendeten Roh- und Brennstoffe pro Nm³ 200 bis 1000 mg Staub, 500 bis 3000 mg S0₂ und S0₃ mit einem SOa-Anteilvon 5 bis 10 %, etwa 100 mg HCI, 20 bis 50 mg HF und 1500 bis 3000 mg Stickoxide. Für die Abtrennung des Staubes stehen unter anderem Tuchfilter und elektrostatische Abscheider zur Verfügung. Die Abtrennung der gasförmigen Schadstoffe kann mittels Zugabe von Sorbentien und Reaktionsstoffen ggf. unter Zuhilfenahme von Katalysatoren erfolgen. Bei der Zugabe der Sorbentien unterscheidet man trockene, nasse und quasi-trokkene Verfahren.

Bei den trockenen Verfahren werden pulverförmige Sorbentien dem Gasstrom zugesetzt und nach Reaktion mit den oder Anlagerung von Schadstoffen meist zusammen mit dem Staub wieder aus dem Gasstrom abgetrennt. Häufig werden die abgetrennten Stoffe erneut in den Gasstrom eingebracht um einerseits eine bessere Ausnutzung der Sorbentien zu erreichen und andererseits eine höhere Feststoffkonzentration im Gasstrom aufrecht zu erhalten, wodurch die Wahrscheinlichkeit des Zusammentreffens von Feststoffpartikeln und Schadgasmolekülen erhöht wird.

Trockene Verfahren haben den Vorteil, daß die Abgastemperatur praktisch nicht beeinflußt wird.

Bei den nassen Verfahren werden die Sorbentien als Lösung oder Aufschlämmung in den Gasstrom eingebracht, womit einerseits zwar eine bessere Umsetzung und Schadstoffabtrennung erreicht wird, andererseits aber der Abgasstrom zwangsläufig sehr stark abgekühlt wird. Damit sind erhebliche Wärmeverluste verbunden und es müssen vielfach sogar Maßnahmen getroffen werden, den Abgasstrom nach der Reinigung wieder auf die zulässige Mindest-Kamintemperatur aufzuheizen. Außerdem erfordern die nassen Verfahren eine aufwendige Aufbereitung der Waschflüssigkeit.

Die quasi-trockenen Verfahren stellen eine Kombination der trockenen und nassen Verfahren dar. Bei ihnen werden die Sorbentien, wie bei den nassen Verfahren, als Lösung oder Aufschlämmung zugegeben, es wird aber die Flüssigkeitsmenge so bemessen, daß sie im Abgasstrom vollständig verdampft und die Sorbentien nach Schadstoffaufnahme mit den Stäuben trocken abgeschieden werden können. Hier spart man die Aufbereitung der Waschflüssigkeit, muß aber eine starke Temperaturabsenkung der Abgase mit entsprechenden Wärmeverlusten hinnehmen.

Bei Abgasen von Glaswannen mit den Eingangs genannten Schadstoffgehalten kommen nasse Verfahren aus verschiedenen Gründen nicht in Betracht. Auf Ablehnung stößt in der Praxis insbesondere die Notwendigkeit der Abwasseraufbereitung, die vielfach als besondere chemische Fabrik bezeichnet wird, deren Betriebskosten und Schwierigkeiten man nicht überblicken kann. Mit trockenen Verfahren kann man zwar eine befriedigende Abscheidung der Stäube, des S0₂ und S0₃ sowie des HF erreichen, nicht aber des HCI. Bei quasi-trockenen Verfahren ist es in gewisser Beziehung umgekehrt, weil hier bis auf HF alle anderen Schadstoffe mit vertretbarem Aufwand auf die vorgeschriebenen Restkonzentrationen aus dem Abgas abgetrennt werden können. Es besteht somit die Aufgabe, für solche Abgase ein Verfahren vorzuschlagen, das die geschilderten Nachteile nicht aufweist und mit dem die gesetzlich vorgeschriebenen Grenzwerte für die Schadstoffe im gereinigten Abgas bei wirtschaftlich vertretbarem Aufwand eingehalten werden können.

Diese Aufgabe wird erfindungsgemäß dadurch gelöst, daß die zu reinigenden Abgase eine Temperatur von 350 bis 450 _{°} C aufweisen und daß 70 bis 90% der insgesamt benötigten Sorbentien als trockenes Pulver in den Gasstrom eingebracht werden, daß der Gasstrom anschließend verwirbelt wird und daß 10 bis 30 % der insgesamt benötigten Sorbentien als Lösung oder Aufschlämmung in den verwirbelten Gasstrom eingebracht werden. Das erfindungsgemäße Verfahren bietet insbesondere den Vorteil, daß durch die Zugabe von Sorbentien als Lösung oder Aufschlämmung die Abgastemperatur um nicht mehr als 15 ° C, vorzugsweise um nicht mehr als 10_{°}C, erniedrigt wird. Nach dem erfindungsgemäßen Verfahren wird beispielsweise ein gereinigtes Abgas erzeugt. das je Nm³ nicht mehr als 400 mg S0₂, 5 mg S0₃, 30 mg HCI und 5 mg HF enthält.

Weitere Ausgestaltungen des erfindungsgemäßen Verfahrens sind den Unteransprüchen 2 bis 8 zu entnehmen.

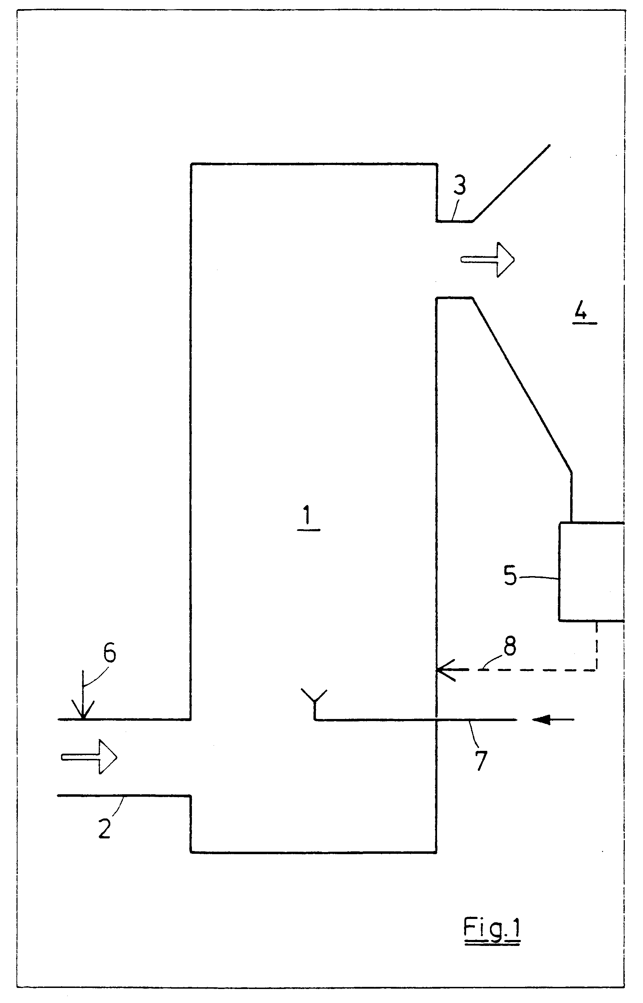

Fig. 1 zeigt an einem Beispiel schematisch den erfindungsgemäßen Verfahrensablauf. Dargestellt ist ein Reaktionsbehälter (1), der Einbauten zur Verwirbelung des Gasstroms enthalten kann und in seinen Abmessungen auf die vorgesehene Dauer der Abgasbehandlung abgestimmt ist, wobei der Querschnitt die Gasgeschwindigkeit bestimmt und die Höhe, die Aufenthaltsdauer bzw. Behandlungszeit. Dieser Reaktor wird über die Leitung (2) mit dem zu reinigenden Gas beschickt, wobei die Leitung tangential an den Reaktionsbehälter herangeführt sein kann, um schon so einen gewisse Verwirbelung des Gasstroms zu erzeugen. Nach der Behandlung strömt das Gas durch die Leitung (3) in einen elektrostatischen Staubabscheider (4) , von dem nur der Eingangsbereich und ein Teil der Staubabzugsvorrichtung (5) dargestellt ist.

70 bis 90 % der insgesamt benötigten Sorbentien werden bereits vor dem Reaktionsbehälter (1) trocken über die Leitung (6) in den ankommenden Abgasstrom eingebracht; die restlichen 10 bis 30 % werden als Lösung oder Aufschlämmung über das Sprühsystem (7) in den Reaktionsbehälter (1) eingesprüht. Gegebenenfalls kann das im elektrostatischen Staubabscheider (4) anfallende Gemisch aus Staub und schadstoffbeladenen Sorbentien teilweise über die Leitung (8) in den Reaktionsbehälter (1) zurückgeführt werden, um darin eine höhere Feststoffkonzentration zu erreichen und die Sorbentien besser auszunutzen.

Das erfindungsgemäße Verfahren hat den Vorteil, das alle Schadstoffe bis auf die zulässigen Restgehalte aus dem Abgas abgetrennt werden können, ohne daß eine naßchemische Aufbereitung von Abwässern erforderlich wird und ohne daß große Wärmeverluste in Kauf genommen werden müssen. Die normalerweise mit 350 bis 450 °C anfallenden Abgase werden nur um 10 bis 15 _{°} C abgekühlt, so daß eine anschließende katalytische Beseitigung der Stickoxide ohne zusätzliche Maßnahmen in einem dafür günstigen Temperaturbereich durchgeführt werden kann.

## Patentansprüche

1. Verfahren zur Reinigung der beim Schmelzen von Glas entstehenden Abgase, die neben Staub auch gasförmige Schadstoffe, wie S0₂, S0₃, HCI, HF und Stickoxide, enthalten, durch Zugabe von Sorbentien in den Gasstrom und trockene Abscheidung der mit Schadstoffen beladenen Sorbentien zusammen mit dem Staub, dadurch gekennzeichnet, daß die zu reinigenden Abgase eine Temperatur von 350 bis 450 _{°} C aufweisen und daß 70 bis 90% der insgesamt benötigten Sorbentien als trockenes Pulver in den Gasstrom eingebracht werden, daß der Gasstrom anschließend verwirbelt wird und daß 10 bis 30 % der insgesamt benötigten Sorbentien als Lösung oder Aufschlämmung in den verwirbelten Gasstrom eingebracht werden.

2. Verfahren nach Anspruch 1, dadurch gekennzeichnet, daß als trockenes Pulver Natriumcarbonat und/oder Kalziumhydroxid verwendet wird.

3. Verfahren nach Anspruch 1 oder 2, dadurch gekennzeichnet, daß als Lösung Natriumhydroxid oder Natriumcarbonat in Wasser verwendet wird.

4. Verfahren nach Anspruch 1 oder 2, dadurch gekennzeichnet, daß als Aufschlämmung Kalziumhydroxid in Wasser verwendet wird.

5. Verfahren nach einem der Ansprüche 1 bis 4, dadurch gekennzeichnet, daß die als Lösung oder Aufschlämmung eingebrachte Menge an Sorbentien nach dem HCI-Gehalt im Abgas bemessen wird.

6. Verfahren nach einem der Ansprüche 1 bis 5, dadurch gekennzeichnet, daß die Abscheidung der mit Schadstoffen beladenen Sorbentien und des Staubs in einem Elektrofilter erfolgt.

7. Verfahren nach einem der Ansprüche 1 bis 6, dadurch gekennzeichnet, daß die abgeschiedenen Stoffe zurückgeführt und wieder in den zu reinigenden Abgasstrom eingebracht werden.

8. Verfahren nach einem der Ansprüche 1 bis 7, dadurch gekennzeichnet, daß die insoweit gereinigten Abgase anschließend noch einer katalytischen Entstickungsbehandlung unterworfen werden.

## Claims

1. Process for purifying the waste gases which evolve upon the melting of glass, which in addition to dust also contain gaseous pollutants, such as S0₂, S0₃, HCI, HF and nitric oxides, by the addition of sorbents to the gas stream and dry separation of the sorbents which are laden with pollutants together with the dust, characterised in that the waste gases which are to be purified are at a temperature of 350 to 450 _{°} C and that 70 to 90% of the total sorbents required is introduced into the gas stream as a dry powder, that the gas stream is then swirled and that 10 to 30% of the total sorbents required is introduced into the swirled gas stream as a solution or suspension.

2. Process according to Claim 1, characterised in that sodium carbonate and/or calcium hydroxide is used as the dry powder.

3. Process according to Claim 1 or 2, characterised in that sodium hydroxide or sodium carbonate in water is used as the solution.

4. Process according to Claim 1 or 2, characterised in that calcium hydroxide in water is used as the suspension.

5. Process according to one of Claims 1 to 4, characterised in that the quantity of sorbents introduced as a solution or suspension is calculated according to the HCI content in the waste gas.

6. Process according to one of Claims 1 to 5, characterised in that the separation of the sorbents which are laden with pollutants and of the dust takes place in an electrostatic filter.

7. Process according to one of Claims 1 to 6, characterised in that the substances which are separated off are recycled and reintroduced into the stream of waste gas which is to be purified.

8. Process according to one of Claims 1 to 7, characterised in that the waste gases purified in this respect are then subjected to an additional catalytic nitrogen removal treatment.

## Revendications

1. Procédé d'épuration d'effluents gazeux qui se produisent lors de la fusion du verre et qui contiennent, outre de la poussière, des substances polluantes gazeuses, comme S0₂, S0₃, HCI, HF et des oxydes d'azote, par addition de sorbants au courant gazeux et séparation à sec des sorbants chargés de substances polluantes avec la poussière, caractérisé en ce que les effluents gazeux à épurer ont une température de 350 à 450 _{°} C et le procédé consiste à introduire de 70 à 90 % de l'ensemble des sorbants nécessaires sous forme de poudre sèche dans le courant gazeux, à faire ensuite tourbillonner le courant gazeux, et à introduire de 10 à 30 % de l'ensemble des sorbants nécessaires sous la forme d'une solution ou d'une suspension dans le courant gazeux tourbillonnant.

2. Procédé suivant la revendication 1, caractérisé en ce qu'il consiste à utiliser comme poudre sèche du carbonate de sodium et/ou de l'hydroxyde de potassium.

3. Procédé suivant la revendication 1 ou 2, caractérisé en ce qu'il consiste à utiliser comme solution de l'hydroxyde de sodium ou du carbonate de sodium dans l'eau.

4. Procédé suivant la revendication 1 ou 2, caractérisé en ce qu'il consiste à utiliser comme suspension de l'hydroxyde de potassium dans de l'eau.

5. Procédé suivant l'une des revendication 1 à 4, caractérisé en ce qu'il consiste à mesurer la quantité de sorbant introduite sous forme de solution ou de suspension par la teneur en HCI des effluents gazeux.

6. Procédé suivant l'une des revendications 1 à 5, caractérisé en ce qu'il consiste à effectuer la séparation des sorbants chargés de substances polluantes et de la poussière dans un électrofiltre.

7. Procédé suivant l'une des revendications 1 à 6, caractérisé en ce qu'il consiste à recycler les substances séparées et à les réintroduire dans les effluents gazeux à épurer.

8. Procédé suivant l'une des revendications 1 à 7, caractérisé en ce qu'il consiste à soumettre les effluents gazeux épurés à un traitement supplémentaire catalytique de dénitrification.
